# FASCICULE DE BREVET EUROPEEN

(11) **EP 3 362 334 B1**
(45) Date de publication et mention de la délivrance du brevet: **27.11.2019**
(21) Numéro de dépôt: 16790434.1
(22) Date de dépôt: 11.10.2016
(51) Int. Cl.: B62D 21/15

(54) **COMPOSANT DE STRUCTURE DE VÉHICULE AUTOMOBILE, ET SECTION DE VOIE BASSE AVANT COMPRENANT UN TEL COMPOSANT**
KRAFTFAHRZEUG-STRUKTURBAUTEIL UND VORDEREN UNTERBEREICH MIT EINEM SOLCHEN BAUTEIL
MOTOR VEHICLE STRUCTURAL COMPONENT, AND LOWER FRONT STRUCTURE WITH SUCH A COMPONENT

(30) Priorité: 14.10.2015 WO PCT/IB2015/057873
(43) Date de publication de la demande: 22.08.2018
(73) Titulaire: ArcelorMittal, 1160 Luxembourg (LU)
(72) Inventeur: BOUTON, Cédric, 92250 La Garenne Colombes (FR); LAHELLEC, Edith, 51520 Sarry (FR); COLMONT, Jean-Louis, 95800 Cergy Saint Christophe (FR); DERCHU, Thierry, 55000 Bar le Duc (FR); GABREL, Maxime, 51240 Mairy sur Marne (FR)
(74) Mandataire: Lavoix
(86) Numéro de dépôt international: PCT/IB2016/056066
(87) Numéro de publication internationale: WO 2017/064611

(56) Documents cités:
- EP-A2- 1 332 949
- FR-A1- 2 874 368
- FR-A1- 2 887 211
- FR-A1- 2 926 052
- US-A1- 2014 203 543

## Description

La présente invention concerne un composant de structure de véhicule automobile, destiné à être relié à un élément de structure dudit véhicule automobile de type berceau, ledit composant comprenant une prolonge s'étendant dans une direction longitudinale entre une extrémité avant et une extrémité arrière, ladite extrémité arrière étant configurée pour faire face audit élément de structure lorsque ledit composant est relié audit élément de structure.

L'invention concerne en particulier un composant d'une section de voie basse avant d'un véhicule automobile.

La partie avant d'un véhicule joue un rôle essentiel en cas de choc, en particulier lors d'un choc frontal. Notamment, la partie avant d'un véhicule doit être capable de participer à l'amortissement du choc, c'est-à-dire à concourir à l'absorption et à la dissipation des efforts engendrés par le choc.

Le comportement de la partie avant du véhicule lors de chocs est soumis à des contraintes, dont certaines sont décrites de façon normalisée. Il s'agit notamment de normes régissant le comportement de la partie avant lors d'un choc à faible vitesse, également appelé choc réparabilité, et lors d'un choc à grande vitesse.

Afin d'améliorer le comportement de la partie avant, en particulier en cas de choc à haute vitesse, il est avantageux de configurer cette partie avant de manière à répartir les efforts engendrés lors d'un choc sur plusieurs chemins de charge, en particulier de répartir ces efforts entre la voie haute, la voie médiane et la voie basse de la partie avant du véhicule.

La voie médiane comprend généralement deux longerons s'étendant dans une direction longitudinale du véhicule, les deux longerons de la voie médiane étant en outre reliés par une poutre transversale.

La voie basse comporte généralement un berceau, ou berceau avant, destiné à supporter la suspension avant du véhicule. La voie basse comporte également deux prolonges disposées de chaque côté du véhicule, chaque prolonge comportant une première pièce allongée s'étendant à partir du berceau avant vers l'avant du véhicule, dans une direction sensiblement longitudinale. Une telle structure de voie basse est notamment décrite dans les documents FR 2887211 A1 et FR 2874368 A1.

La prolonge est reliée directement ou indirectement au berceau avant, et est configurée pour absorber des efforts générés par un choc, en particulier frontal, et pour faire transiter au moins une partie de ces efforts vers le berceau avant.

Lors d'un choc frontal à haute vitesse, le véhicule est soumis à un impact contre un obstacle à une vitesse supérieure à 50 km/h.

Lors d'un choc à faible vitesse, le véhicule est soumis à un impact contre un obstacle rigide à une vitesse d'environ 16 km/h. Lors de tels chocs, le châssis du véhicule, et en particulier ses longerons, le berceau avant et les prolonges de la voie basse, ne doivent pas être déformés plastiquement.

Les exigences en termes de poids et de comportement lors de choc frontal à haute vitesse ont récemment conduit à faire transiter des efforts de plus en plus importants par la voie basse avant du véhicule.

Cependant, l'absorption d'efforts de plus en plus importants par la voie basse avant lors de chocs avant à haute vitesse ont conduit à soumettre la voie basse avant à des efforts accrus lors de chocs avant à faible vitesse, et ainsi à altérer le comportement de la voie basse lors de tels chocs à faible vitesse, notamment à déformer plastiquement le berceau sous l'effet des efforts transmis par les prolonges.

Afin d'améliorer le comportement de la voie basse avant, notamment du berceau, lors d'un choc à faible vitesse, une solution consiste à renforcer le berceau avant, par exemple en augmentant l'épaisseur du berceau ou en y ajoutant des renforts. Une telle solution ne donne pas entièrement satisfaction.

Un but de l'invention est donc une section de voie basse avant, en particulier une prolonge, permettant d'éviter une déformation du berceau lors d'un choc à faible vitesse.

A cet effet, l'invention a pour objet un composant de structure comportant les caractéristiques de la revendication 1.

Suivant des modes particuliers de réalisation, le composant comporte l'une ou plusieurs des caractéristiques suivantes, prises isolément ou selon toute combinaison technique possible :
- ledit premier seuil d'efforts prédéterminé est supérieur ou égal à un deuxième seuil d'efforts correspondant aux efforts transmis par ladite première surface de contact à ladite première région dudit élément de structure lors d'un choc à une première vitesse prédéterminée, notamment un choc à faible vitesse ;
- ledit premier seuil d'efforts prédéterminé est inférieur à un troisième seuil d'efforts correspondant aux efforts qui seraient transmis par ladite première surface de contact à ladite première région dudit élément de structure lors d'un choc à une deuxième vitesse prédéterminée, notamment un choc haute vitesse ;
- ledit élément de butée est fixé à ladite paroi longitudinale de ladite prolonge par des moyens de fixation frangibles ;
- lesdits moyens de fixation frangibles sont configurés pour se rompre lorsque ladite première partie des efforts devient égale audit premier seuil d'efforts prédéterminé ;
- le composant comporte une zone d'amorçage de pliage, ledit composant étant configuré pour se plier au niveau de ladite zone d'amorçage de pliage lorsque ladite première partie des efforts devient égale audit premier seuil d'efforts prédéterminé, de telle sorte que ladite première partie des efforts transmise par ladite première surface de contact dudit élément de butée à ladite première région dudit élément de structure reste inférieure audit premier seuil d'efforts prédéterminé ;
- ladite extrémité arrière comprend au moins une deuxième surface de contact destinée à faire face à au moins une deuxième région dudit élément de structure lorsque ledit composant est relié audit élément de structure, ledit composant étant configuré de telle sorte que lorsque ladite prolonge est soumise à un impact engendrant des efforts dans ladite direction longitudinale depuis ladite extrémité avant vers ladite extrémité arrière, ladite deuxième surface de contact vienne au contact de ladite deuxième région dudit élément de structure et transmette une deuxième partie des efforts engendrés par ledit impact à ladite deuxième région dudit élément de structure ;
- la première et la deuxième surfaces de contact s'étendent dans un premier et un deuxième plans respectivement, lesdits premier et deuxième plans étant distincts ;
- ladite extrémité arrière comprend la deuxième surface de contact et une troisième surface de contact, ladite troisième surface de contact s'étendant dans un troisième plan distinct du premier et du deuxième plans, ladite prolonge étant configurée de telle sorte que lorsque ladite prolonge est soumise à un impact engendrant des efforts dans ladite direction longitudinale depuis ladite extrémité avant vers ladite extrémité arrière, ladite deuxième surface de contact vienne au contact de ladite deuxième région dudit élément de structure et transmette une deuxième partie des efforts engendrés par ledit impact à ladite deuxième région dudit élément de structure, et ladite troisième surface de contact vienne au contact d'une troisième région dudit élément de structure et transmette une troisième partie des efforts engendrés par ledit impact à ladite troisième région dudit élément de structure ;
- ladite prolonge comprend une pièce allongée s'étendant dans ladite direction longitudinale et une pièce intermédiaire solidaire d'une extrémité de ladite pièce allongée, ladite pièce intermédiaire comprenant ladite deuxième surface de contact ;
- ladite pièce intermédiaire comprend en outre ladite troisième surface de contact ;

L'invention a également pour objet une section de voie basse avant d'un véhicule automobile, comprenant un composant selon l'invention et un élément de structure du type berceau comprenant une première région, ledit composant étant relié audit élément de structure, ledit élément de butée faisant face à une première région dudit élément de structure, ledit élément de butée étant configuré de telle sorte que lorsque ladite prolonge est soumise à un impact engendrant des efforts dans ladite direction longitudinale depuis ladite extrémité avant vers ladite extrémité arrière, ladite première surface de contact dudit élément de butée vienne au contact de ladite première région dudit élément de structure et transmette une première partie des efforts engendrés par ledit impact à ladite première région dudit élément de structure.

Suivant des modes particuliers de réalisation, la section de voie basse avant comporte l'une ou plusieurs des caractéristiques suivantes, prises isolément ou selon toute combinaison technique possible :
- ladite extrémité arrière comprend au moins une deuxième surface de contact faisant face à au moins une deuxième région dudit élément de structure, ledit composant étant configuré de telle sorte que lorsque ladite prolonge est soumise à un impact engendrant des efforts dans ladite direction longitudinale depuis ladite extrémité avant vers ladite extrémité arrière, ladite deuxième surface de contact vienne au contact de ladite deuxième région dudit élément de structure et transmette une deuxième partie des efforts engendrés par ledit impact à ladite deuxième région dudit élément de structure ;
- une première distance entre ladite première surface de contact et ladite première région est sensiblement égale à une deuxième distance entre ladite deuxième surface de contact et ladite deuxième région, la différence entre ladite première distance et ladite deuxième distance étant, en valeur absolue, inférieure ou égale à 1.0 mm ;
- la première et la deuxième surfaces de contact s'étendent dans un premier et un deuxième plans respectivement, lesdits premier et deuxième plans étant distincts,
- ladite extrémité arrière comprend la deuxième surface de contact et une troisième surface de contact, ladite troisième surface de contact s'étendant dans un troisième plan distinct du premier et du deuxième plans, ladite prolonge étant configurée de telle sorte que lorsque ladite prolonge est soumise à un impact engendrant des efforts dans ladite direction longitudinale depuis ladite extrémité avant vers ladite extrémité arrière, ladite deuxième surface de contact vienne au contact de ladite deuxième région dudit élément de structure et transmette une deuxième partie des efforts engendrés par ledit impact à ladite deuxième région dudit élément de structure, et ladite troisième surface de contact vienne au contact d'une troisième région dudit élément de structure et transmette une troisième partie des efforts engendrés par ledit impact à ladite troisième région dudit élément de structure ;
- la deuxième distance entre ladite deuxième surface de contact et ladite deuxième région est sensiblement égale à une troisième distance entre ladite troisième surface de contact et ladite troisième région, la différence entre ladite deuxième distance et ladite troisième distance étant, en valeur absolue, inférieure ou égale à 1.0 mm ;
- ledit élément de butée est configuré de telle sorte que ladite première partie des efforts transmise par ladite première surface de contact dudit élément de butée à ladite première région dudit élément de structure reste inférieure à un premier seuil d'efforts prédéterminé, indépendamment des efforts engendrés par ledit impact ;
- ledit premier seuil d'efforts prédéterminé est supérieur ou égal à un deuxième seuil d'efforts correspondant aux efforts transmis par ladite première surface de contact à ladite première région dudit élément de structure lors d'un choc à une première vitesse prédéterminée, notamment un choc à faible vitesse ;
- ledit premier seuil d'efforts prédéterminé est inférieur à un troisième seuil d'efforts correspondant aux efforts qui seraient transmis par ladite première surface de contact à ladite première région dudit élément de structure lors d'un choc à une deuxième vitesse prédéterminée, notamment un choc haute vitesse ;
- ledit élément de butée est fixé à ladite paroi longitudinale de ladite prolonge par des moyens de fixation frangibles ;
- lesdits moyens de fixation frangibles sont configurés pour se rompre lorsque ladite première partie des efforts devient égale audit premier seuil d'efforts prédéterminé ;
- le composant comporte une zone d'amorçage de pliage, ledit composant étant configuré pour se plier au niveau de ladite zone d'amorçage de pliage lorsque ladite première partie des efforts devient égale audit premier seuil d'efforts prédéterminé, de telle sorte que ladite première partie des efforts transmise par ladite première surface de contact dudit élément de butée à ladite première région dudit élément de structure reste inférieure audit premier seuil d'efforts prédéterminé ;
- ladite prolonge comprend une pièce allongée s'étendant dans ladite direction longitudinale et une pièce intermédiaire solidaire d'une extrémité de ladite pièce allongée, ladite pièce intermédiaire comprenant ladite deuxième surface de contact ;
- ladite pièce intermédiaire comprend en outre ladite troisième surface de contact ;
- ledit élément de butée est réalisé en un acier dont la résistance mécanique est supérieure ou égale à 570 MPa.

L'invention a également pour objet une structure de véhicule automobile, comprenant une section de voie basse avant selon l'invention.

D'autres caractéristiques et avantages de l'invention apparaîtront à la lecture de la description ci-après, ainsi que des dessins annexés sur lesquels :
- la figure 1 représente schématiquement l'avant d'un véhicule automobile vu de côté, comprenant une section de voie basse avant selon un mode de réalisation de l'invention,
- la figure 2 est une vue détaillée de la section de voie basse avant de la figure 1,
- la figure 3 est un graphique illustrant des efforts transmis lors de chocs de diverses intensités,
- la figure 4 est une vue détaillée de la section de voie basse avant de la figure 1, selon une variante,
- la figure 5 est une vue détaillée d'une section de voie basse avant, selon une autre variante.

Dans tout ce qui suit, les orientations choisies sont indicatives et s'entendent par rapport à un véhicule automobile. En particulier, les termes « haut », « bas », « avant » et « arrière » sont utilisés par référence à l'orientation usuelle des éléments, composants ou pièces lorsqu'ils sont assemblés sur une structure de véhicule automobile.

Par ailleurs, les termes « transversal » et « longitudinal » doivent être compris en rapport avec l'axe longitudinal du véhicule automobile, qui est l'axe d'allongement et de déplacement du véhicule automobile.

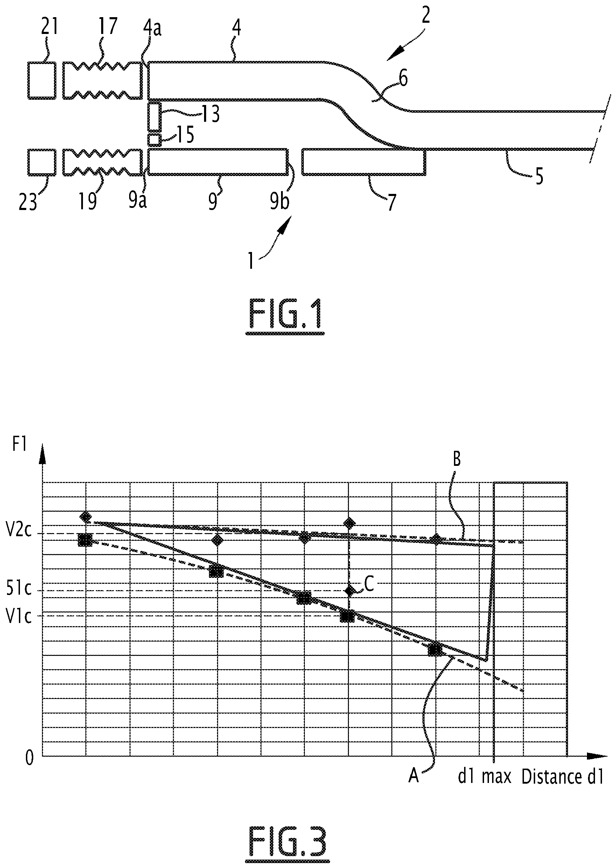

On a représenté sur la figure 1 la partie avant 1 d'un véhicule selon un premier mode de réalisation de l'invention.

La partie avant comprend un élément de structure allongé 2, ci-après appelé longeron ou longeron avant. Le longeron 2 comprend une portion avant 4 s'étendant dans une première direction sensiblement longitudinale du véhicule, une portion arrière 5 s'étendant dans une deuxième direction sensiblement parallèle à la première direction, en-dessous de la première direction, et une portion de transition 6 s'étendant vers le bas et vers l'arrière entre la portion avant 4 et la portion arrière 5, et reliant la portion avant 4 et la portion arrière 5.

Le longeron 2 surmonte un élément de structure 7 du véhicule, formant un berceau avant, et ci-après appelé berceau. Ce berceau 7 comprend généralement une plate-forme munie d'attaches (non représentées) destinées à supporter la suspension avant du véhicule.

Le berceau 7 est par exemple formé à partir d'une tôle d'épaisseur d'au moins 3 mm, et de préférence formée d'un acier dont la limite d'élasticité est supérieure à 500 MPa.

La portion avant 4 du longeron 2 et le berceau 7 s'étendent généralement selon des plans parallèles entre eux, tandis que la portion arrière 5 du longeron 2 s'étend à une hauteur voisine de la hauteur du berceau 7. Le berceau 7 est par exemple fixé de manière rigide à la portion arrière 5 du longeron 2, par exemple par soudage, rivetage ou encore boulonnage, ou par l'intermédiaire d'un système souple filtrant les vibrations.

La partie avant 1 comprend en outre un composant de structure 9 faisant face au berceau 7 à l'avant du berceau 7.

Le composant de structure 9 s'étend dans une direction sensiblement longitudinale du véhicule entre une extrémité avant 9a et une extrémité arrière 9b. L'extrémité arrière 9b du composant 9 fait face au berceau 7. Le composant 9 s'étend depuis l'extrémité arrière 9b sensiblement parallèlement à la portion avant 4 du longeron 2, jusqu'à son extrémité avant 9a située sensiblement à l'aplomb d'une extrémité avant 4a de la portion avant 4 du longeron 2.

Une pièce allongée 13, également appelée pendard, relie verticalement la portion avant 4 du longeron 2 au composant 9, en particulier l'extrémité avant 4a de la portion avant 4 à l'extrémité avant 9a du composant 9. Le pendard 13 est par exemple réalisé sous la forme d'un élément de poutre.

En outre, un dispositif de liaison 15 est monté entre l'extrémité avant 9a du composant 9 et le pendard 13. Le dispositif de liaison 15 est configuré pour autoriser un déplacement du composant 9 par rapport au pendard 13. Ce déplacement est essentiellement longitudinal.

De préférence, le dispositif de liaison 15 comprend une liaison de type glissière munie d'un organe d'arrêt arrachable. Le mot glissière désigne ici tout guidage en déplacement, non nécessairement rectiligne, à la manière d'une came, à contact permanent ou non. L'organe d'arrêt arrachable est, compte tenu de son montage, configuré pour céder, ou rompre, sous un effort de rupture prédéterminé, aux tolérances près. Le déplacement du composant 9 par rapport au pendard 13 ne peut ainsi s'effectuer qu'à partir d'un effort appliqué (notamment longitudinal, de l'avant vers l'arrière) supérieur ou égal à l'effort de rupture prédéterminé de l'organe d'arrêt arrachable. Pour des efforts inférieurs, ce déplacement est empêché.

La portion avant 4 du longeron 2 reçoit à son extrémité avant 4a un organe d'absorption de choc, ou absorbeur 17. Le composant 9 reçoit à son extrémité avant 9a un absorbeur 19. Lors d'un choc frontal, les absorbeurs 17 et 19 sont prévus pour se déformer, en général selon leur longueur, en dissipant une quantité d'énergie prédéterminée.

La portion avant 4 du longeron 2 supporte un côté d'une traverse pare-choc médiane 21 par l'intermédiaire de l'absorbeur 17. Le composant 9 supporte en partie une traverse pare-chocs inférieure 23 par l'intermédiaire de l'absorbeur 19.

L'avant de véhicule décrit ci-dessus comprend en outre, symétriquement, une seconde partie avant 4 d'un second longeron 2, un second composant 9, un second pendard 13, un second dispositif de liaison 15 et de seconds absorbeurs 17 et 19. Les traverses 21 et 23 sont ainsi supportées par les portions avant 4 des deux longerons 2 et par les deux composants 9 respectivement.

L'ensemble comprenant les composants 9, la traverse 23, optionnellement les absorbeurs 19, ainsi que le berceau 7 est généralement appelé voie basse avant. L'ensemble comprenant les longerons 2, la traverse 21, et les absorbeurs 17 est généralement appelé voie médiane avant, remarque étant faite qu'il peut exister plus haut une voie haute avant.

Par ailleurs, on désignera dans la description et dans les revendications par le terme « section de voie avant » la moitié de la voie avant située d'un côté du véhicule. Dans le cas présent, la section de voie basse avant est la moitié de la voie basse avant située d'un côté du véhicule et les composants communs aux deux moitiés du véhicule, c'est-à-dire inclut un composant 9, un absorbeur 19, le berceau 7 et la traverse 23.

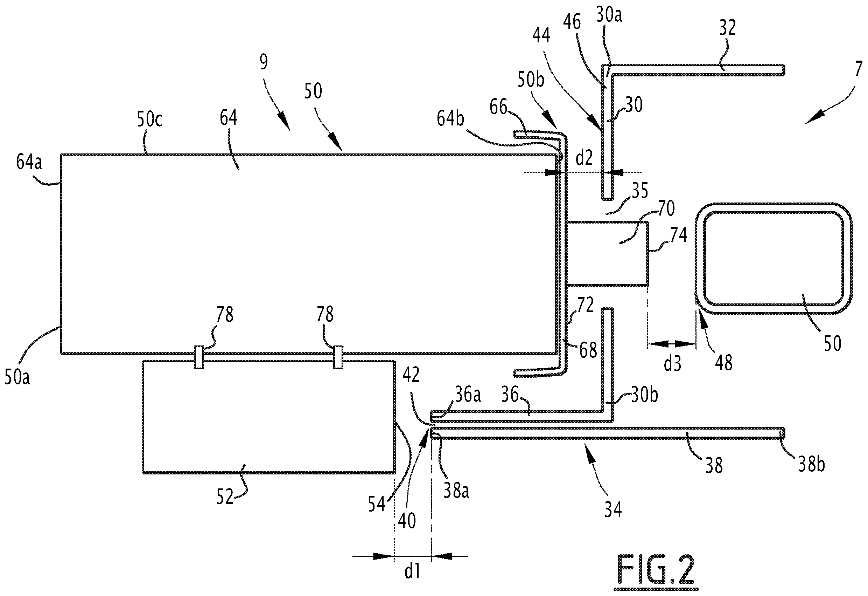

Le composant 9, le berceau 7 et leur agencement sont illustrés plus en détails sur la figure 2.

Sur la figure 2, seule une extrémité avant du berceau 7 est représentée.

Cette extrémité avant comporte une paroi transversale 30, une paroi longitudinale supérieure 32 et une paroi longitudinale inférieure 34.

La paroi transversale 30 s'étend dans selon un plan sensiblement transversal du véhicule, entre un bord supérieur 30a et un bord inférieur 30b.

Dans l'exemple représenté, la paroi transversale 30 est munie d'une ouverture traversante 35.

La paroi longitudinale supérieure 32 s'étend sensiblement orthogonalement à la paroi transversale 30, dans un plan sensiblement horizontal, vers l'arrière depuis le bord supérieur 30a.

La paroi longitudinale inférieure 34 est une double paroi. Elle comprend en effet un segment supérieur 36 et un segment inférieur 38. Le segment supérieur 36 s'étend sensiblement orthogonalement à la paroi transversale 30, dans un plan sensiblement horizontal, vers l'avant depuis le bord inférieur 30b, jusqu'à un bord avant 36a du segment supérieur. Le segment inférieur 38 s'étend entre un bord avant 38a et un bord arrière 38b, sensiblement parallèlement au segment supérieur 36, vers l'arrière depuis le bord avant 36a du segment supérieur 36. Le segment inférieur 38 s'étend ainsi sensiblement orthogonalement à la paroi transversale 30, dans un plan sensiblement horizontal.

Le bord avant 36a du segment supérieur 36 et le bord avant 38a du segment inférieur 38 définissent une première région 40 du berceau 7.

La première région 40 comprend une première surface de contact 42 s'étendant dans un plan sensiblement transversal.

La paroi transversale 30 forme une deuxième région 44 du berceau 7. La paroi transversale 30 comprend une deuxième surface de contact 46, dirigée vers l'avant du véhicule, et qui s'étend dans un plan sensiblement transversal.

Une troisième région 48 du berceau 7 est formée par un organe 50, qui est par exemple un organe de fixation du berceau 7 à la structure du véhicule.

La première région 40 du berceau est une région de rigidité renforcée par rapport à la deuxième région 44 du berceau, et de préférence également par rapport à la troisième région 48 du berceau 7.

Le composant 9 comprend une prolonge 50, également appelée allonge, extension ou add-on, et un élément de butée 52.

La prolonge 50 s'étend dans une direction longitudinale entre une extrémité avant 50a et une extrémité arrière 50b, correspondant aux extrémités avant 9a et arrière 9b du composant 9 (figure 1). La prolonge 50 comprend une paroi latérale 50c sensiblement longitudinale s'étendant entre l'extrémité avant 50a et l'extrémité arrière 50b. La prolonge 50 est par exemple de forme tubulaire, de section transversale circulaire ou polygonale.

Ainsi, l'extrémité avant 50a de la prolonge 50 est reliée à la portion avant 4 du longeron 2 par l'intermédiaire du pendard 13 et du dispositif de liaison 15.

L'extrémité arrière 50b de la prolonge 50 fait face au berceau 7, en particulier fait face à la deuxième région 44 du berceau 7. Dans l'exemple représenté, l'extrémité arrière 50b de la prolonge 50 fait également face à la troisième région 48 du berceau 7.

Dans ce mode de réalisation, le composant 9, en particulier la prolonge 50, n'est pas directement fixé au berceau 7, mais est relié au berceau 7 par l'intermédiaire du pendard 13, du dispositif de liaison 15 et du longeron 2.

A l'état de repos, c'est-à-dire lorsqu'aucun effort, ou lorsqu'un effort inférieur à l'effort de rupture prédéterminé de l'organe d'arrêt arrachable du dispositif de liaison 15 mentionné ci-dessus, est appliqué sur la prolonge 50, le composant 9 est à l'écart du berceau 7. Le dispositif de liaison 15 permet ainsi d'éviter tout contact intempestif entre le composant 9 et le berceau, susceptible de générer des vibrations et de l'usure, tout en autorisant un déplacement du composant 9 lors d'un choc, ce qui permet de faire transiter une partie des efforts engendrés par le choc par la voie basse.

L'élément de butée 52 fait saillie depuis la paroi latérale 50c de la prolonge 50, dans une direction sensiblement transversale, vers le bas. L'élément de butée 52 est solidaire de la prolonge 50. L'élément de butée 52 est destiné à transmettre une partie des efforts engendrés lors d'un impact sur la prolonge 50 à la première région 40 du berceau. L'élément de butée 52 est réalisé en acier, dont la limite d'élasticité est de préférence supérieure ou égale à 500 MPa, et la résistance mécanique est de préférence supérieure ou égale à 550 MPa.

L'élément de butée 52 est configuré pour venir en butée contre le berceau 7, en particulier contre la première région 40 du berceau 7, lorsque la prolonge 50 est soumise à un impact engendrant des efforts dans la direction longitudinale depuis son extrémité avant 50a vers son extrémité arrière 50b, de manière à transmettre une première partie des efforts engendrés par cet impact à la première région 40 du berceau 7.

Par « impact engendrant des efforts dans la direction longitudinale » on entend un impact engendrant des efforts au moins dans la direction longitudinale, étant entendu que des efforts selon une autre direction, notamment transversale, peuvent être engendrés par l'impact. Bien entendu, l'impact n'est pas nécessairement produit sur la prolonge 50 même, mais peut être transmis par d'autres composants de la structure du véhicule automobile, notamment par la traverse pare-chocs inférieure 23, lors d'un choc.

L'élément de butée 52 comprend une première surface de contact 54 qui fait face à la première région 40 du berceau 7, en particulier à la première surface de contact 42 de la première région 40 du berceau 7. De préférence, la première surface de contact 54 de l'élément de butée 52 s'étend selon un premier plan sensiblement transversal, en particulier sensiblement parallèlement à la première surface de contact 42 de la première région 40 du berceau 7.

L'élément de butée 52 est configuré de telle sorte que, lorsque la prolonge 50 est soumise à un impact engendrant des efforts dans la direction longitudinale depuis son extrémité avant 50a vers son extrémité arrière 50b, la première surface de contact 54 de l'élément de butée 52 vienne en contact avec la première région 40 du berceau 7, de manière à transmettre une première partie des efforts engendrés par cet impact à la première région 40 du berceau 7.

A l'état de repos, c'est-à-dire lorsqu'aucun effort, ou lorsqu'un effort inférieur à l'effort de rupture prédéterminé de l'organe d'arrêt arrachable du dispositif de liaison 15 mentionné ci-dessus, est appliqué sur la prolonge 50, l'élément de butée 52 n'est pas en contact avec la première région 40 du berceau 7. Ainsi, les premières surfaces de contact 54 et 42 de l'élément de butée 52 et de la première région 40 du berceau ne sont pas en contact, mais sont à une distance notée d1 l'une de l'autre, la distance d1 étant prédéterminée, comme décrit ci-après. L'élément de butée 52 est ainsi positionné sur la paroi latérale de la prolonge 50 le long de sa direction longitudinale de telle sorte que la distance entre les premières surfaces de contact 54 et 42 soient situées à la distance d1 prédéterminée l'une de l'autre.

Lorsque la prolonge 50 est soumise à un effort longitudinal de l'avant vers l'arrière, cet effort étant supérieur ou égal à l'effort de rupture prédéterminé de l'organe d'arrêt arrachable du dispositif de liaison 15, la prolonge 50 est configurée pour se déplacer dans la direction longitudinale, l'élément de butée 52 venant alors en butée contre la première région 40 du berceau 7 et transmettant une première partie des efforts auxquels la prolonge 50 est soumise à la première région 40 du berceau 7. En particulier, la première surface de contact 54 de l'élément de butée 52 vient en contact contre la première surface de contact 42 de la première région du berceau, de telle sorte que l'élément de butée 52 transmet une première partie des efforts auxquels la prolonge est soumise à la première région 40 du berceau.

La prolonge 50 comprend une pièce allongée 64 et une pièce intermédiaire 66, désignée par la suite par le terme coupelle.

La pièce allongée 64 s'étend dans une direction sensiblement longitudinale entre une extrémité avant 64a, formant l'extrémité avant 50a de la prolonge et correspondant à l'extrémité avant 9a du composant 9, et une extrémité arrière 64b. La pièce allongée 64 comprend la paroi latérale 50c de la prolonge.

La pièce allongée 64 est réalisée en acier, dont la limite d'élasticité est par exemple d'au moins 670 MPa et la résistance mécanique d'au moins 780 MPa. La pièce allongée 64 est de préférence du type « à déformation programmée », c'est-à-dire dont la loi de déformation sous l'effet d'un effort de compression est déterminée. Une telle pièce est notamment décrite dans le document WO2005/003587.

La coupelle 66 est solidaire de l'extrémité arrière 64b de la pièce allongée 64. La coupelle 66 est intercalée entre la pièce allongée 64 et le berceau 7, en particulier entre la pièce allongée 64 et les deuxième et troisième régions 44, 48 du berceau 7. La coupelle 66 est par exemple réalisée en acier, dont la limite d'élasticité est de préférence supérieure à 400 MPa. L'épaisseur de la coupelle 66 est par exemple comprise entre 1,5 mm à 3.0 mm.

La coupelle 66 comprend une paroi 68 sensiblement transversale, et un plot 70 faisant saillie dans une direction sensiblement longitudinal depuis la paroi 68 vers l'arrière, c'est-à-dire en direction du berceau 7. De préférence, comme illustré sur la Figure 2, le plot 70 est reçu dans l'ouverture 35 de la paroi transversale 30 du berceau 7.

La paroi 68 comprend une surface arrière 72, qui fait face à la deuxième région 44 du berceau 7, en particulier à la deuxième surface de contact 46. La surface arrière 72, qui forme une deuxième surface de contact, s'étend dans un deuxième plan sensiblement transversal, et sensiblement parallèle à la deuxième surface de contact 46 du berceau 7. Le deuxième plan est distinct du premier plan dans lequel s'étend la première surface de contact 54. De préférence, le deuxième plan est disposé en arrière du premier plan dans la direction longitudinale.

Le composant 9 est configuré de telle sorte que, lorsque la prolonge 50 est soumise à un impact engendrant des efforts dans la direction longitudinale depuis son extrémité avant 50a vers son extrémité arrière 50b, la deuxième surface de contact 72 vienne en contact avec la deuxième région 44 du berceau 7, de manière à transmettre une deuxième partie des efforts engendrés par cet impact à la deuxième région 44 du berceau 7.

A l'état de repos, c'est-à-dire lorsqu'aucun effort, ou lorsqu'un effort inférieur à l'effort de rupture prédéterminé de l'organe d'arrêt arrachable du dispositif de liaison 15, est appliqué sur la prolonge 50, la deuxième surface de contact 72 n'est pas en contact avec la deuxième région 44 du berceau 7. Ainsi, les deuxièmes surfaces de contact 72 et 46 de la prolonge 50 et de la deuxième région 44 du berceau 7 ne sont pas en contact, mais sont à une distance notée d2 l'une de l'autre, la distance d2 étant prédéterminée, comme décrit ci-après.

Lorsque la prolonge 50 est soumise à un effort longitudinal de l'avant vers l'arrière, cet effort étant supérieur ou égal à l'effort de rupture prédéterminé de l'organe d'arrêt arrachable du dispositif de liaison 15, la prolonge 50 est configurée pour se déplacer dans la direction longitudinale, la deuxième surface de contact 72 de la prolonge 50 venant en contact contre la deuxième surface de contact 46 de la deuxième région 44 du berceau 7, de telle sorte que la prolonge transmet une deuxième partie des efforts auxquels elle est soumise à la deuxième région 44 du berceau 7.

Le plot 70 comprend une surface arrière 74, qui fait face à la troisième région 48 de contact du berceau 7. La surface arrière 74, qui forme une troisième surface de contact, s'étend dans un troisième plan sensiblement transversal.

Le troisième plan est distinct du deuxième plan dans lequel s'étend la deuxième surface de contact 72, et également distinct du premier plan dans lequel s'étend la première surface de contact 54. Le troisième plan est disposé en arrière du deuxième plan dans la direction longitudinale.

Le composant 9 est configuré de telle sorte que, lorsque la prolonge 50 est soumise à un impact engendrant des efforts dans la direction longitudinale depuis son extrémité avant 50a vers son extrémité arrière 50b, la troisième surface de contact 74 vienne en contact avec la troisième région 48 du berceau 7, de manière à transmettre une troisième partie des efforts engendrés par cet impact à la deuxième région 44 du berceau 7.

A l'état de repos, c'est-à-dire lorsqu'aucun effort, ou lorsqu'un effort inférieur à l'effort de rupture prédéterminé de l'organe d'arrêt arrachable du dispositif de liaison 15, est appliqué sur la prolonge 50, la troisième surface de contact 74 n'est pas en contact avec la troisième région 48 du berceau 7, mais est à une distance notée d3 de la troisième région du berceau.

Lorsque la prolonge 50 est soumise à un effort longitudinal de l'avant vers l'arrière, cet effort étant supérieur ou égal à l'effort de rupture prédéterminé de l'organe d'arrêt arrachable du dispositif de liaison 15, la prolonge 50 est configurée pour se déplacer dans la direction longitudinale, la troisième surface de contact 74 de la prolonge 50 venant en contact de la troisième région 48 du berceau 7, de telle sorte que la prolonge transmet une troisième partie des efforts auxquels elle est soumise à la troisième région 48 du berceau 7.

Ainsi, dans ce mode de réalisation, lorsque la prolonge 50 est soumise à un impact engendrant des efforts longitudinaux de l'avant vers l'arrière, ces efforts étant supérieurs ou égaux à l'effort de rupture prédéterminé de l'organe d'arrêt arrachable du dispositif de liaison 15, la prolonge 50 est configurée pour se déplacer dans la direction longitudinale. L'élément de butée 52 vient alors en butée contre la première région 40 du berceau 7 et transmet une première partie des efforts auxquels la prolonge 50 est soumise à la première région 40 du berceau 7. Par ailleurs, la deuxième surface de contact 72 vient au contact de la deuxième région 44 du berceau 7 et transmet une deuxième partie des efforts engendrés par l'impact à la deuxième région 44 du berceau. Enfin, la troisième surface de contact 74 vient au contact de la troisième région 48 du berceau 7 et transmet une troisième partie des efforts engendrés par l'impact à la troisième région 48 du berceau.

Par conséquent, les efforts auxquels est soumise la prolonge 50 sont transmis au berceau 7 en étant répartis dans trois régions distinctes du berceau. Ainsi, la présence de l'élément de butée 52 sur la prolonge 50 permet de réduire les efforts transmis à la deuxième et à la troisième région du berceau 7, et ainsi de faire subir, notamment lors d'un choc à faible vitesse, à la deuxième et à la troisième régions 44 et 48, des efforts moindres que ceux qui seraient transmis en l'absence de l'élément de butée. L'élément de butée 54 permet donc de limiter les risques d'endommagement du berceau 7, en particulier de déformation plastique du berceau, lors d'un choc à faible vitesse.

La répartition des efforts sur les première 40, deuxième 44 et troisième 48 régions du berceau 7 dépend des distances relatives d1, d2 et d3.

Les distances d1, d2 et d3 sont choisies de manière à répartir les efforts transmis à la première, la deuxième et la troisième région du berceau 7 de telle sorte que, lorsque la prolonge 50 est soumise à un impact correspondant à un choc à faible vitesse :
- la première partie des efforts, transmise à la première région 40, soit inférieure à un seuil de ruine de la butée et/ou de la première région 40,
- la deuxième partie des efforts, transmise à la deuxième région 44, soit inférieure à un seuil au-delà duquel une déformation en flexion supérieure à un seuil prédéterminé de déformation de la paroi transversale 30 serait constatée,
- la troisième partie des efforts, transmise à la troisième région 48, soit inférieure à un seuil de tenue de la troisième région 48.

Le seuil prédéterminé de déformation est par exemple défini comme une flèche maximale à ne pas dépasser, par exemple une flèche maximale de 1.0 mm. Dans ce cas, les distances d1, d2 et d3 sont choisies de telle sorte que, lorsque la prolonge 50 est soumise à un impact correspondant à un choc à faible vitesse, la deuxième partie des efforts, transmise à la deuxième région 44, soit inférieure à un seuil au-delà duquel une flèche maximale de la paroi transversale 30 de plus de 1.0 mm serait constatée.

Selon un autre exemple, le seuil prédéterminé de déformation est une limite de déformation plastique de la paroi transversale 30, par exemple fixée à 2%. Dans ce cas, les distances d1, d2 et d3 sont choisies de telle sorte que, lorsque la prolonge 50 est soumise à un impact correspondant à un choc à faible vitesse, la deuxième partie des efforts, transmise à la deuxième région 44, soit inférieure à un seuil au-delà duquel une déformation en flexion dans le domaine plastique de plus de 2% de la paroi transversale 30 serait constatée.

Ces deux critères peuvent être cumulés. Ainsi, selon un exemple, les distances d1, d2 et d3 sont choisies de telle sorte que, lorsque la prolonge 50 est soumise à un impact correspondant à un choc à faible vitesse, la deuxième partie des efforts, transmise à la deuxième région 44, soit inférieure à un premier seuil au-delà duquel une flèche maximale de la paroi transversale 30 de plus de 1.0 mm serait constatée et soit inférieure à un deuxième seuil au-delà duquel une déformation en flexion dans le domaine plastique de plus de 2% de la paroi transversale 30 serait constatée.

Par exemple, les distances d1 et d2 sont choisies sensiblement égales, ce qui signifie que lors d'un impact engendrant des efforts sur la prolonge 50 dans sa direction longitudinale depuis son extrémité avant 50a vers son extrémité arrière 50b, le contact entre la première surface 44 de l'élément de butée 52 et la première région 40 du berceau 7 et le contact entre la deuxième surface de contact 72 et la deuxième région 44 du berceau sont sensiblement simultanés. Par « sensiblement égales », on entend que la différence entre la distance d1 et la distance d2 est inférieure ou égale à 1.0 mm.

De préférence, la distance d1 est inférieure ou égale à la distance d2.

Ainsi, lors d'un impact engendrant des efforts sur la prolonge 50 dans sa direction longitudinale depuis son extrémité avant 50a vers son extrémité arrière 50b, le contact entre la première surface 44 de l'élément de butée 52 et la première région 40 du berceau 7 s'effectue avant le contact entre la deuxième surface de contact 72 et la deuxième région 44 du berceau, ce qui permet de diminuer le risque de déformation plastique du berceau 7, en particulier de la deuxième région 44 du berceau 7.

En outre, la distance d3 est par exemple choisie sensiblement égale aux distances d1 et d2, ce qui signifie que lors d'un impact engendrant des efforts sur la prolonge 50 dans sa direction longitudinale depuis son extrémité avant 50a vers son extrémité arrière 50b, le contact entre la première surface 44 de l'élément de butée 52 et la première région 40 du berceau 7, le contact entre la deuxième surface de contact 72 et la deuxième région 44 du berceau 7 et le contact entre la troisième surface de contact 74 et la troisième région 48 du berceau 7 sont sensiblement simultanés. En particulier, la différence entre la distance d2 et la distance d1 est en valeur absolue inférieure ou égale à 1.0 mm, et la différence entre la distance d2 et la distance d3 est en valeur absolue inférieure ou égale à 1.0 mm.

De manière générale, on constate que, lors d'un choc à faible vitesse, la première partie des efforts, transmise à la première région 40, est d'autant plus importante que la distance d1 entre les premières surfaces de contact 54 et 42 est faible, à distances d2 et d3 constantes. Au contraire, lorsque la distance d1 entre les premières surfaces de contact 54 et 42 augmente, à distances d2 et d3 constantes, la première partie des efforts, transmise à la première région 40, diminue, ce qui entraine de fait une augmentation des efforts transmis à la deuxième et à la troisième régions 44 et 48, et une augmentation du risque d'endommagement du berceau.

La figure 3 représente ainsi une première courbe A illustrant les efforts de contact F1 entre la première surface de contact 54 de l'élément de butée 52 et la première région 40 du berceau 7, correspondant à la première partie des efforts mentionnée ci-dessus, lors d'un choc à faible vitesse. Cette courbe est interrompue pour une distance d1ₘₐₓ correspondant à la distance d1 pour laquelle la première partie des efforts transmis à la première région 40 est insuffisante, entrainant une transmission d'efforts trop importants à la deuxième et/ou à la troisième région(s) du berceau 7, et un endommagement du berceau 7.

Lors d'un choc à haute vitesse, la première partie des efforts, transmise à la première région 40, est quasiment indépendante de la distance d1, comme illustré par la courbe B de la figure 3.

De préférence, l'élément de butée 52 est configuré de telle sorte que lorsque la prolonge 50 est soumise à un impact engendrant des efforts dans la direction longitudinale depuis l'extrémité avant 50a vers l'extrémité arrière 50b, la première partie des efforts transmise à la première région 40 du berceau 7 par la première surface de contact 54 reste inférieure à un premier seuil d'efforts prédéterminé, quels que soient les efforts engendrés par l'impact auquel la prolonge 50 est soumise.

De préférence, tant que la première partie des efforts reste inférieure à ce premier seuil d'effort prédéterminé, cette première partie des efforts correspond à une première fraction des efforts engendrés par l'impact auquel la prolonge 50 est soumise. En revanche, dès que la première partie des efforts devient égal à ce premier seuil d'effort prédéterminé, la première partie des efforts correspond à une deuxième fraction des efforts engendrés par l'impact auquel la prolonge 50 est soumise, inférieure à la première fraction.

Ainsi, l'élément de butée 52 intègre une fonction de fusibilité afin de transmettre une moindre fraction des efforts à la première région du berceau 7, ou plus généralement à toute région du berceau, lorsque les premiers efforts qui seraient transmis en l'absence d'une telle fonction de fusibilité seraient supérieurs au premier seuil d'efforts prédéterminé.

Ce premier seuil d'effort prédéterminé est de préférence compris, pour des distances d1, d2 et d3 fixées, entre une première valeur V1 de la première partie des efforts et une deuxième valeur V2 de la première partie des efforts.

La première valeur V1 de la première partie des efforts correspond aux efforts transmis par la prolonge 50 à l'élément de butée 52 puis à la première région 40 lors d'un choc à faible vitesse.

La deuxième valeur V2 de la première partie des efforts correspond aux efforts transmis par la prolonge 50 à l'élément de butée 52 et à destination de la première région 40 lors d'un choc haute vitesse.

En d'autres termes, l'élément de butée 52 est configuré pour transmettre la première fraction des efforts à la première région 40 pour des chocs engendrant des efforts au moins égaux à un deuxième seuil d'efforts, qui est par exemple égal aux efforts engendrés lors d'un choc à faible vitesse.

En revanche, l'élément de butée 52 transmet une moindre fraction des efforts à la première région du berceau 7, ou plus généralement à toute région du berceau, lorsque les efforts générés par le choc sont supérieurs ou égaux à ceux générés par un choc haute vitesse. Ceci permet de limiter les perturbations de la cinématique de choc et du comportement de la voie basse avant lors d'un choc haute vitesse par l'élément de butée 52.

On a ainsi représenté sur la figure 3, à titre d'exemple, un point C indiquant un premier seuil d'efforts prédéterminé S1c fixé pour une distance donnée d1c. On constate que le premier seuil d'efforts S1c est supérieur aux efforts V1c transmis par l'élément de butée 52 à la première région 40 lors d'un choc à faible vitesse, mais inférieur aux efforts V2c qui seraient transmis par l'élément de butée 52 à la première région 40 lors d'un choc à haute vitesse. Ceci permet de s'assurer que l'élément de butée 52 transmette la première fraction des efforts à la première région 40 au moins tant que les efforts reçus par la prolonge 50 sont égaux à ceux reçus lors d'un choc à faible vitesse, mais au plus tant que les efforts reçus par la prolonge 50 sont égaux à ceux reçus lors d'un choc haute vitesse.

A cette fin, l'élément de butée 52 est configuré pour se déformer ou pour venir à l'écart de la première région 40, et plus généralement du berceau 7, lorsque les efforts transmis à l'élément de butée 52 qui seraient transmis à la première région 40 seraient supérieurs au premier seuil d'efforts prédéterminé. De manière générale, l'élément de butée 52 est configuré de telle sorte que lorsque les efforts transmis à l'élément de butée 52 deviennent égaux au premier seuil d'efforts prédéterminé, la première surface de contact 54 s'écarte au moins partiellement de la première région 40 de manière à limiter les efforts transmis à la première région 40.

Par exemple, l'élément de butée 52 étant fixée à la prolonge 50, en particulier à la pièce allongée 64, par des moyens de fixation frangibles 78, par exemple des vis, les moyens de fixation frangibles sont configurés pour se rompre lorsque la première partie des efforts transmis à la première région 40 par l'élément de butée 52 devient égale au premier seuil d'efforts prédéterminé. Ainsi, la première partie des efforts transmis à la première région 40 par l'élément de butée 52 reste toujours inférieure au premier seuil d'efforts prédéterminé.

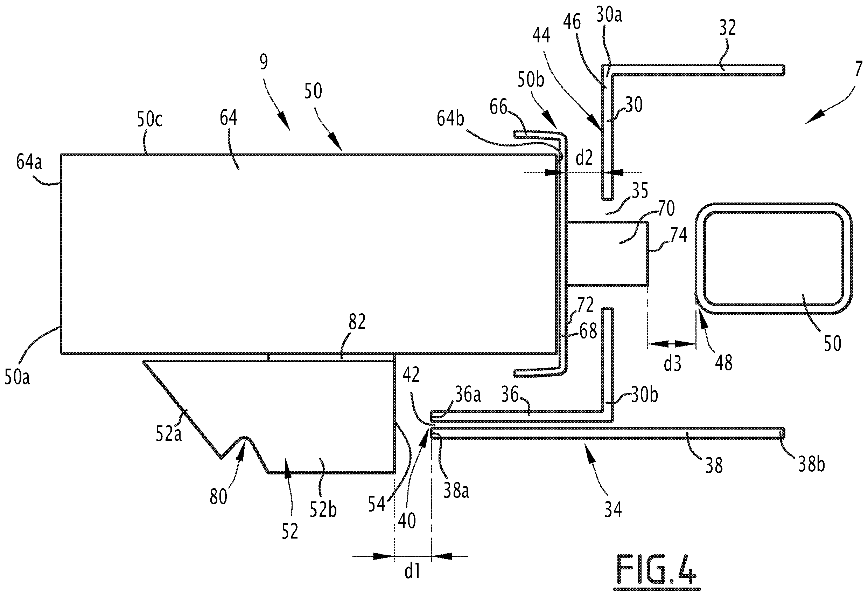

En variante, ou en complément, comme illustré sur la Figure 4, le composant 9 comporte une zone d'amorçage de pliage 80, qui est réalisée sur l'élément de butée 52. Cette zone d'amorçage de pliage est par exemple une zone d'épaisseur moindre que sur le reste de l'élément de butée, facilitant l'amorçage d'un pliage. Le composant 9 est configuré pour se plier au niveau de cette zone d'amorçage de pliage 80, de telle sorte que la surface de contact entre l'élément de butée 52 et la première région 40 diminue lorsque la première partie des efforts devient égale au premier seuil d'efforts prédéterminé.

Dans l'exemple illustré sur la Figure 4, l'élément de butée 52 est fixé sur la prolonge 50 par soudage. L'élément de butée 52 comprend une portion avant 52a et une portion arrière 52b, la portion arrière 52b comprenant la première surface de contact 54. La zone d'amorçage de pliage 80 est située à la jonction entre la portion avant 52a et la portion arrière 52b. De préférence, seule la portion arrière 52b est soudée à la prolonge 50, par exemple le long d'un cordon de soudure 82, la portion avant 52a prenant simplement appui contre la prolonge 50 lorsque l'élément de butée 52 vient au contact de la première région 40. En variante, l'élément de butée 52 est réalisé d'une pièce avec la pièce allongée 64, le cordon de soudure 82 étant alors remplacé par une zone de liaison continue entre la pièce allongée 64 et l'élément de butée 52.

Lorsque la première partie des efforts transmise par l'élément de butée 52 à la première région 40 du berceau 7 atteint le premier seuil d'efforts prédéterminé, le composant 9, incluant le prolonge 50 et l'élément de butée 52, est configurée pour se plier au niveau de la zone d'amorçage de pliage 80. Ainsi, la surface de contact entre l'élément de butée 52 et le berceau 7 diminue, de telle sorte que la fraction des efforts transmise par l'élément de butée 52 au berceau 7 est amoindrie.

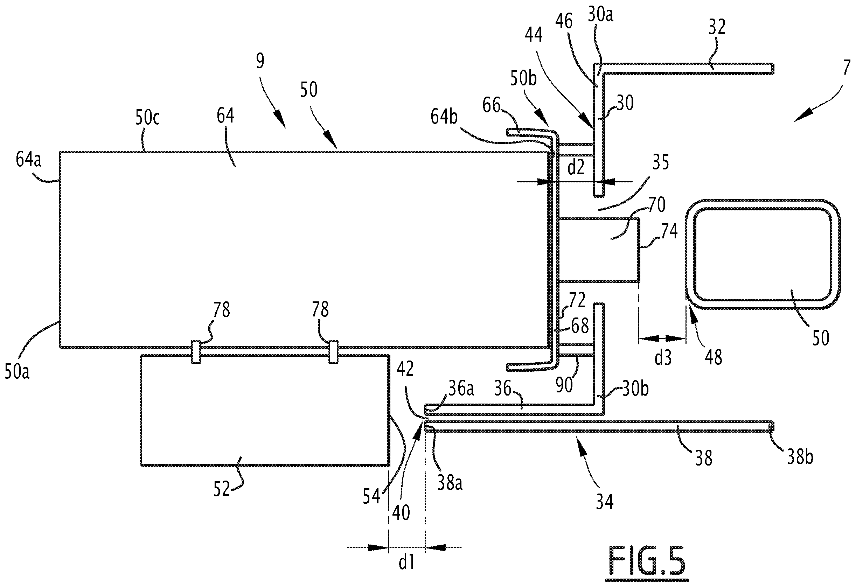

Selon une autre variante, illustrée sur la figure 5, le composant 9 est fixé au berceau 7 au moyen d'une articulation élastique 90 interposée entre l'extrémité arrière 50b de la prolonge 50 et le berceau 7, en particulier entre l'extrémité arrière 50b de la prolonge 50 et la deuxième région du berceau 7, plus précisément entre la coupelle 66 et la deuxième région du berceau 7.

L'articulation élastique 90 est par exemple de forme générale annulaire. L'articulation élastique 90 permet, comme le dispositif 15 de liaison, d'éviter tout contact intempestif entre le composant 9 et le berceau 7, susceptible de générer des vibrations et de l'usure, tout en autorisant un déplacement du composant 9 lors d'un choc, ce qui permet de faire transiter une partie des efforts engendrés par le choc par la voie basse.

L'articulation élastique 90 comprend par exemple un évidement autorisant un contact entre les deuxième et troisième surfaces de contact 72 et 74 du composant avec les deuxième et troisième régions 44 et 48 du berceau 7 respectivement lorsque la prolonge 50 est soumise à un impact engendrant des efforts dans la direction longitudinale, depuis son extrémité avant 50a vers son extrémité arrière 50b, supérieurs à un seuil d'efforts prédéterminé. Dans cette variante, le dispositif 15 de liaison peut être omis, le pendard 13 reliant directement la portion avant 4 du longeron 2 au composant 9.

Il doit être compris que les exemples de réalisation présentés ci-dessus ne sont pas limitatifs.

En particulier, la coupelle 66 pourrait être absente de la prolonge 50, l'extrémité arrière 50b de la prolonge 50 étant alors formée par l'extrémité arrière 64b de la pièce allongée. Selon une autre variante, le coupelle 66 ne comprend pas de plot 70 et la prolonge 50 ne comprend pas de troisième surface de contact destinée à venir en contact avec une troisième région du berceau 7.

Par ailleurs, dans la variante illustrée sur la figure 5, l'élément de butée 52 est fixée à la prolonge 50 par des moyens de fixation frangibles 7, mais pourrait être venu de matière avec la pièce allongée 64, ou soudé sur la pièce allongée 64, comme illustré sur la figure 4, et comporter une zone d'amorçage de pliage 80.

## Revendications

1. Composant (9) de structure de véhicule automobile, destiné à être relié à un élément de structure (7) dudit véhicule automobile de type berceau, ledit composant (9) comprenant une prolonge (50) s'étendant dans une direction longitudinale entre une extrémité avant (50a) et une extrémité arrière (50b), ladite extrémité arrière (50b) étant configurée pour faire face audit élément de structure (7) lorsque ledit composant (9) est relié audit élément de structure (7),
ledit composant (9) étant **caractérisé en ce qu'**il comprend un élément de butée (52) faisant saillie dans une direction transversale depuis une paroi longitudinale de ladite prolonge (50), ledit élément de butée (52) comprenant une première surface de contact (54) configurée pour faire face à une première région (40) dudit élément de structure (7) lorsque ledit composant (9) est relié audit élément de structure (7), ledit élément de butée (52) étant en outre configuré de telle sorte que lorsque ladite prolonge (50) est soumise à un impact engendrant des efforts dans ladite direction longitudinale depuis ladite extrémité avant (50a) vers ladite extrémité arrière (50b), ladite première surface de contact (54) dudit élément de butée (52) vienne au contact de ladite première région (40) dudit élément de structure (7) et transmette une première partie des efforts engendrés par ledit impact à ladite première région (40) dudit élément de structure (7),
**en ce que** ledit élément de butée (52) est configuré de telle sorte que ladite première partie des efforts transmise par ladite première surface de contact (54) dudit élément de butée (52) à ladite première région (40) dudit élément de structure (7) reste inférieure à un premier seuil d'efforts prédéterminé, indépendamment des efforts engendrés par ledit impact,
et **en ce que** ledit élément de butée (52) est réalisé en un acier dont la résistance mécanique est supérieure ou égale à 570 MPa.

2. Composant (9) selon la revendication 1, **caractérisé en ce que** ledit premier seuil d'efforts prédéterminé est supérieur ou égal à un deuxième seuil d'efforts correspondant aux efforts transmis par ladite première surface de contact (54) à ladite première région (40) dudit élément de structure (7) lors d'un choc à une première vitesse prédéterminée, notamment un choc à faible vitesse.

3. Composant (9) selon la revendication 2, **caractérisé en ce que** ledit premier seuil d'efforts prédéterminé est inférieur à un troisième seuil d'efforts correspondant aux efforts qui seraient transmis par ladite première surface de contact (54) à ladite première région (40) dudit élément de structure (7) lors d'un choc à une deuxième vitesse prédéterminée, notamment un choc haute vitesse.

4. Composant (9) selon l'une quelconque des revendications 1 à 3, **caractérisé en ce que** ledit élément de butée (52) est fixé à ladite paroi longitudinale de ladite prolonge (50) par des moyens de fixation (78) frangibles.

5. Composant (9) selon la revendication 4, **caractérisé en ce que** lesdits moyens de fixation (78) frangibles sont configurés pour se rompre lorsque ladite première partie des efforts devient égale audit premier seuil d'efforts prédéterminé.

6. Composant (9) selon l'une quelconque des revendications 1 à 3, **caractérisé en ce qu'**il comporte une zone d'amorçage de pliage (80), ledit composant (9) étant configuré pour se plier au niveau de ladite zone d'amorçage de pliage (80) lorsque ladite première partie des efforts devient égale audit premier seuil d'efforts prédéterminé, de telle sorte que ladite première partie des efforts transmise par ladite première surface de contact (54) dudit élément de butée (52) à ladite première région (40) dudit élément de structure (7) reste inférieure audit premier seuil d'efforts prédéterminé.

7. Composant (9) selon l'une quelconque des revendications 1 à 6, **caractérisé en ce que** ladite extrémité arrière (50b) comprend au moins une deuxième surface de contact (72) destinée à faire face à au moins une deuxième région (44) dudit élément de structure (7) lorsque ledit composant (9) est relié audit élément de structure (7), ledit composant (9) étant configuré de telle sorte que lorsque ladite prolonge (50) est soumise à un impact engendrant des efforts dans ladite direction longitudinale depuis ladite extrémité avant (50a) vers ladite extrémité arrière (50b), ladite deuxième surface de contact (72) vienne au contact de ladite deuxième région (44) dudit élément de structure (7) et transmette une deuxième partie des efforts engendrés par ledit impact à ladite deuxième région (44) dudit élément de structure (7).

8. Composant (9) selon la revendication 7, **caractérisé en ce que** la première (54) et la deuxième (72) surfaces de contact s'étendent dans un premier et un deuxième plans respectivement, lesdits premier et deuxième plans étant distincts.

9. Composant (9) selon la revendication 8, **caractérisé en ce que** ladite extrémité arrière (50b) comprend la deuxième surface de contact (72) et une troisième surface de contact (74), ladite troisième surface de contact (74) s'étendant dans un troisième plan distinct du premier et du deuxième plans, ladite prolonge (50) étant configurée de telle sorte que lorsque ladite prolonge (50) est soumise à un impact engendrant des efforts dans ladite direction longitudinale depuis ladite extrémité avant (50a) vers ladite extrémité arrière (50b), ladite deuxième surface de contact (72) vienne au contact de ladite deuxième région (44) dudit élément de structure (7) et transmette une deuxième partie des efforts engendrés par ledit impact à ladite deuxième région (44) dudit élément de structure (7), et ladite troisième surface de contact (74) vienne au contact d'une troisième région (48) dudit élément de structure (7) et transmette une troisième partie des efforts engendrés par ledit impact à ladite troisième région (48) dudit élément de structure (7).

10. Composant (9) selon l'une quelconque des revendications 7 à 9, **caractérisé en ce que** ladite prolonge (50) comprend une pièce allongée (64) s'étendant dans ladite direction longitudinale et une pièce intermédiaire (66) solidaire d'une extrémité (50b) de ladite pièce allongée (64), ladite pièce intermédiaire (66) comprenant ladite deuxième surface de contact (72).

11. Composant (9) selon les revendications 9 et 10, **caractérisé en ce que** ladite pièce intermédiaire (66) comprend en outre ladite troisième surface de contact (74).

12. Section de voie basse avant d'un véhicule automobile, comprenant un composant (9) selon l'une quelconque des revendications 1 à 11 et un élément de structure (7) du type berceau comprenant une première région (40), ledit composant (9) étant relié audit élément de structure (7), ledit élément de butée (52) faisant face à une première région (40) dudit élément de structure (7), ledit élément de butée (52) étant configuré de telle sorte que lorsque ladite prolonge (50) est soumise à un impact engendrant des efforts dans ladite direction longitudinale depuis ladite extrémité avant (50a) vers ladite extrémité arrière (50b), ladite première surface de contact (54) dudit élément de butée (52) vienne au contact de ladite première région (40) dudit élément de structure (7) et transmette une première partie des efforts engendrés par ledit impact à ladite première région (40) dudit élément de structure (7).

13. Section de voie basse avant selon la revendication 12, **caractérisée en ce que** ladite extrémité arrière (50b) comprend au moins une deuxième surface de contact (72) faisant face à au moins une deuxième région (44) dudit élément de structure (7), ledit composant (9) étant configuré de telle sorte que lorsque ladite prolonge (50) est soumise à un impact engendrant des efforts dans ladite direction longitudinale depuis ladite extrémité avant (50a) vers ladite extrémité arrière (50b), ladite deuxième surface de contact (72) vienne au contact de ladite deuxième région (44) dudit élément de structure (7) et transmette une deuxième partie des efforts engendrés par ledit impact à ladite deuxième région (44) dudit élément de structure (7).

14. Section de voie basse avant selon la revendication 13, **caractérisée en ce qu'**une première distance (d1) entre ladite première surface de contact (54) et ladite première région (40) est sensiblement égale à une deuxième distance (d2) entre ladite deuxième surface de contact (72) et ladite deuxième région (44), la différence entre ladite première distance (d1) et ladite deuxième distance (d2) étant, en valeur absolue, inférieure ou égale à 1.0 mm.

15. Section de voie basse avant selon l'une quelconque des revendications 13 ou 14, **caractérisé en ce que** :
- la première (54) et la deuxième (72) surfaces de contact s'étendent dans un premier et un deuxième plans respectivement, lesdits premier et deuxième plans étant distincts,
- ladite extrémité arrière (50b) comprend la deuxième surface de contact (72) et une troisième surface de contact (74), ladite troisième surface de contact (74) s'étendant dans un troisième plan distinct du premier et du deuxième plans, ladite prolonge (50) étant configurée de telle sorte que lorsque ladite prolonge (50) est soumise à un impact engendrant des efforts dans ladite direction longitudinale depuis ladite extrémité avant (50a) vers ladite extrémité arrière (50b), ladite deuxième surface de contact (72) vienne au contact de ladite deuxième région (44) dudit élément de structure (7) et transmette une deuxième partie des efforts engendrés par ledit impact à ladite deuxième région (44) dudit élément de structure (7), et ladite troisième surface de contact (74) vienne au contact d'une troisième région (48) dudit élément de structure (7) et transmette une troisième partie des efforts engendrés par ledit impact à ladite troisième région (48) dudit élément de structure (7).

16. Section de voie basse avant selon les revendications 14 et 15, **caractérisée en ce que** la deuxième distance (d2) entre ladite deuxième surface de contact (72) et ladite deuxième région (44)est sensiblement égale à une troisième distance (d3) entre ladite troisième surface de contact (74) et ladite troisième région (48), la différence entre ladite deuxième distance (d2) et ladite troisième distance (d3) étant, en valeur absolue, inférieure ou égale à 1.0 mm.

17. Structure de véhicule automobile, comprenant une section de voie basse avant selon l'une quelconque des revendications 12 à 16.

## Patentansprüche

1. Strukturbauteil (9) eines Kraftfahrzeuges, das vorgesehen ist, mit einem Strukturelement (7) des Kraftfahrzeuges vom Typ Halterung verbunden zu werden, wobei das Bauteil (9) eine Verlängerung (50) umfasst, die sich in eine Längsrichtung zwischen einem vorderen Ende (50a) und einem hinteren Ende (50b) erstreckt, wobei das hintere Ende (50b) ausgebildet ist, dem Strukturelement (7) gegenüber zu liegen, wenn das Bauteil (9) mit dem Strukturelement (7) verbunden ist,
wobei das Bauteil (9) **dadurch gekennzeichnet ist, dass** es einen Anschlag (52) umfasst, der in eine Querrichtung von einer Längswand der Verlängerung (50) vorspringt, wobei das Anschlagelement (52) eine erste Kontaktfläche (54) aufweist, die ausgebildet ist, einem ersten Bereich (40) des Strukturelementes (7) gegenüber zu liegen, wenn das Bauteil (9) mit dem Strukturelement (7) verbunden ist, wobei das Anschlagelement (52) außerdem derart ausgebildet ist, dass, wenn die Verlängerung (50) einem Stoß unterworfen wird, der Kräfte in der Längsrichtung von dem vorderen Ende (50a) zu dem hinteren Ende (50b) erzeugt, die erste Kontaktfläche (54) des Anschlagelementes (52) in Kontakt mit dem ersten Bereich (40) des Strukturelementes (7) kommt und einen ersten Teil der von dem Stoß erzeugten Kräfte auf den ersten Bereich (40) des Strukturelementes (7) überträgt,
dass das Anschlagelement (52) derart ausgebildet ist, dass der erste Teil der von der ersten Kontaktfläche (54) des Anschlagelementes (51) auf den ersten Bereich (40) des Strukturelementes (7) übertragenen Kräfte kleiner als eine erste Kräfteschwelle unabhängig von den durch den Stoß erzeugten Kräfte bleiben,
und dass das Anschlagelement (52) aus einem Stahl hergestellt ist, dessen mechanische Festigkeit größer oder gleich 570 MPa ist.

2. Bauteil (9) nach Anspruch 1, **dadurch gekennzeichnet, dass** die erste vorbestimmte Kräfteschwelle größer als eine zweite Kräfteschwelle oder gleich dieser ist, die den von der ersten Kontaktfläche (54) auf den ersten Bereich (40) des Strukturelementes (7) übertragenen Kräfte bei einem Stoß einer ersten vorbestimmten Geschwindigkeit, insbesondere einem Stoß mit geringer Geschwindigkeit, entspricht.

3. Bauteil (9) nach Anspruch 2, **dadurch gekennzeichnet, dass** die erste vorbestimmte Kräfteschwelle kleiner als eine dritte Kräfteschwelle ist, die den Kräften entspricht, die von der ersten Kontaktfläche (54) auf den ersten Bereich (40) des Strukturelementes (7) bei einem Stoß einer zweiten vorbestimmten Geschwindigkeit, insbesondere einem Stoß mit hoher Geschwindigkeit, übertragen würde.

4. Bauteil (9) nach einem beliebigen der Ansprüche 1 bis 3, **dadurch gekennzeichnet, dass** das Anschlagelement (52) an der Längswand der Verlängerung (50) durch brechbare Befestigungsmittel (78) befestigt ist.

5. Bauteil (9) nach Anspruch 4, **dadurch gekennzeichnet dass** die brechbaren Befestigungsmittel (78) ausgebildet sind, zu zerbrechen, wenn der erste Teil der Kräfte gleich der ersten vorbestimmten Kräfteschwelle ist.

6. Bauteil (9) nach einem beliebigen der Ansprüche 1 bis 3, **dadurch gekennzeichnet, dass** es eine Zone (80) zum Auslösen einer Verbiegung aufweist, wobei das Bauteil (9) ausgebildet ist, sich an der Zone (80) zum Auslösen einer Verbiegung zu verbiegen, wenn der erste Teil der Kräfte die erste vorbestimmte Kräfteschwelle erreicht, derart, dass der erste Teil der Kräfte, der von der ersten Kontaktfläche (54) des Anschlagelementes (52) auf den ersten Bereichs (40) des Strukturelementes (7) übertragen wird, kleiner als die erste vorbestimmte Kräfteschwelle bleibt.

7. Bauteil (9) nach einem beliebigen der Ansprüche 1 bis 6, **dadurch gekennzeichnet, dass** das hintere Ende (50b) mindestens eine zweite Kontaktfläche (72) umfasst, die vorgesehen ist, mindestens einem zweiten Bereich (44) des Strukturelementes (7) gegenüber zu liegen, wenn das Bauteil (9) mit dem Strukturelement (7) verbunden ist, wobei das Bauteil (9) derart ausgebildet ist, dass, wenn die Verlängerung (50) einem Stoß unterworfen wird, der Kräfte in der Längsrichtung von dem vorderen Ende (50a) zu dem hinteren Ende (50b) erzeugt, die zweite Kontaktfläche (72) in Kontakt mit dem zweiten Bereich (44) des Strukturelementes (7) kommt und einen zweiten Teil der von dem Stoß erzeugten Kräfte auf den zweiten Bereich (44) des Strukturelementes (7) überträgt.

8. Bauteil (9) nach Anspruch 7, **dadurch gekennzeichnet, dass** die erste (54) und die zweite (72) Kontaktfläche sich jeweils in einer ersten und einer zweiten Ebene erstrecken, wobei die erste und zweite Ebene unterschiedlich zueinander sind.

9. Bauteil (9) nach Anspruch 8, **dadurch gekennzeichnet, dass** das hintere Ende (50b) die zweite Kontaktfläche (72) und eine dritte Kontaktfläche (74) umfasst, wobei die dritte Kontaktfläche (74) sich in einer dritten Ebene, unterschiedlich zu der ersten und der zweiten Ebene, erstreckt, wobei die Verlängerung (50) derart ausgebildet ist, dass, wenn die Verlängerung (50) einem Stoß unterworfen wird, der Kräfte in der Längsrichtung von dem vorderen Ende (50a) zu dem hinteren Ende (50b) erzeugt, die zweite Kontaktfläche (72) in Kontakt mit dem zweiten Bereich (44) des Strukturelementes (7) kommt und einen zweiten Teil der von dem Stoß erzeugten Kräfte auf den zweiten Bereich (44) des Strukturelementes (7) überträgt und die dritte Kontaktfläche (74) in Kontakt mit einem dritten Bereich (48) des Strukturelementes (7) kommt und einen dritten Teil der von dem Stoß erzeugten Kräfte auf den dritten Bereich (48) des Strukturelementes (7) überträgt.

10. Bauteil (9) nach einem beliebigen der Ansprüche 7 bis 9, **dadurch gekennzeichnet, dass** die Verlängerung (50) ein langgestrecktes Teil (64), das sich in die Längsrichtung erstreckt, und ein Zwischenteil (66), das mit einem Ende (50b) des langgestreckten Teils (64) verbunden ist, umfasst, wobei das Zwischenteil (66) die zweite Kontaktfläche (72) aufweist.

11. Bauteil (9) nach den Ansprüchen 9 und 10, **dadurch gekennzeichnet, dass** das Zwischenteil (66) außerdem die dritte Kontaktfläche (74) umfasst.

12. Vorderer Unterbauabschnitt eines Kraftfahrzeuges, ein Bauteil (9) nach einem beliebigen der Ansprüche 1 bis 11 und ein Strukturelement (7) vom Typ Halterung, das einen ersten Bereich (40) aufweist, umfassend, wobei das Bauteil (9) mit dem Strukturelement (7) verbunden ist und das Anschlagelement (52) einem ersten Bereich (40) des Strukturelementes (7) gegenüberliegt, wobei das Anschlagelement (52) derart ausgebildet ist, dass, wenn die Verlängerung (50) einem Stoß unterworfen wird, der Kräfte in die Längsrichtung von dem vorderen Ende (50a) zu dem hinteren Ende (50b) erzeugt, die erste Kontaktfläche (54) des Anschlagelementes (52) in Kontakt mit dem ersten Bereich (40) des Strukturelementes (7) kommt und einen ersten Teil der durch den Stoß erzeugten Kräfte an den ersten Bereich (40) des Strukturelementes (7) überträgt.

13. Vorderer Unterbauabschnitt nach Anspruch 12, **dadurch gekennzeichnet, dass** das hintere Ende (50b) mindestens eine zweite Kontaktfläche (72) umfasst, die mindestens einem zweiten Bereich (44) des Strukturelementes (7) gegenüberliegt, wobei das Bauteil (9) derart ausgebildet ist, dass, wenn die Verlängerung (50) einem Stoß unterworfen wird, der Kräfte in der Längsrichtung von dem vorderen Ende (50a) zu dem hinteren Ende (50b) erzeugt, die zweite Kontaktfläche (72) in Kontakt mit dem zweiten Bereich (44) des Strukturelementes (7) kommt und einen zweiten Teil der von dem Stoß erzeugten Kräfte auf den zweiten Bereich (44) des Strukturelementes (7) überträgt.

14. Vorderer Unterbauabschnitt nach Anspruch 13, **dadurch gekennzeichnet, dass** ein erster Abstand (d1) zwischen der ersten Kontaktfläche (54) und dem ersten Bereich (40) im Wesentlichen gleich einem zweiten Abstand (d2) zwischen der zweiten Kontaktfläche (72) und dem zweiten Bereich (44) ist, wobei die Differenz zwischen dem ersten Abstand (d1) und dem zweiten Abstand (d2) als absolut Wert kleiner oder gleich 1,0 mm ist.

15. Vorderer Unterbauabschnitt nach einem beliebigen der Ansprüche 13 oder 14, **dadurch gekennzeichnet, dass**:
- die erste (54) und die zweite (72) Kontaktfläche sich jeweils in einer ersten und zweiten Ebene erstrecken, wobei die erste und zweite Ebene unterschiedlich zueinander sind,
- das hintere Ende (50b) die zweite Kontaktfläche (72) und eine dritte Kontaktfläche (74) umfasst, wobei die dritte Kontaktfläche (74) sich in einer dritten Ebene, unterschiedlich zu der ersten und der zweiten Ebene, erstreckt, wobei die Verlängerung (50) derart ausgebildet ist, dass, wenn die Verlängerung (50) einem Stoß unterworfen wird, der Kräfte in der Längsrichtung von dem vorderen Ende (50a) zu dem hinteren Ende (50b) erzeugt, die zweite Kontaktfläche (72) in Kontakt mit dem zweiten Bereich (44) des Strukturelementes (7) kommt und einen zweiten Teil der von dem Stoß erzeugten Kräfte auf den zweiten Bereich (44) des Strukturelementes (7) überträgt und die dritte Kontaktfläche (74) in Kontakt mit einem dritten Bereich (48) des Strukturelementes (7) kommt und einen dritten Teil der von dem Stoß erzeugten Kräfte auf den dritten Bereich (48) des Strukturelementes (7) überträgt.

16. Vorderer Unterbauabschnitt nach den Ansprüchen 14 und 15, **dadurch gekennzeichnet, dass** der zweite Abstand (d2) zwischen der zweiten Kontaktfläche (72) und dem zweiten Bereich (44) im Wesentlichen gleich einem dritten Abstand (d3) zwischen der dritten Kontaktfläche (74) und dem dritten Bereich (48) ist, wobei die Differenz zwischen dem zweiten Abstand (d2) und dem dritten Abstand (d3) als absoluter Wert kleiner oder gleich 1,0 mm ist.

17. Aufbau eines Kraftfahrzeuges, einen vorderen Unterbauabschnitt nach einem beliebigen der Ansprüche 12 bis 16 umfassend.

## Claims

1. A motor vehicle structural component (9), intended to be connected to a structural element (7) of said motor vehicle of the cradle type, said component (9) comprising an extension (50) extending in a longitudinal direction between a front end (50a) and a rear end (50b), said rear end (50b) being configured to face said structural element (7) when said component (9) is connected to said structural element (7),
said component (9) being **characterized in that** it comprises a stop element (52) protruding in a transverse direction from a longitudinal wall of said extension (50), said stop element (52) comprising a first contact surface (54) configured to face a first region (40) of said structural element (7) when said component (9) is connected to said structural element (7), said stop element (52) further being configured such that when said extension (50) is subject to an impact creating forces in said longitudinal direction from said front end (50a) toward said rear end (50b), said first contact surface (54) of said stop element (52) comes into contact with said first region (40) of said structural element (7) and transmits a first part of the forces created by said impact to said first region (40) of said structural element (7),
**in that** said stop element (52) is configured such that said first part of the forces transmitted by said first contact surface (54) of said stop element (52) to said first region (40) of said structural element (7) remains below a first predetermined force threshold, independently of the forces created by said impact,
and **in that** said stop element (52) is made from a steel having a tensile strength greater than or equal to 570 MPa.

2. The component (9) according to claim 1, **characterized in that** said first predetermined force threshold is greater than or equal to a second force threshold corresponding to the forces transmitted by said first contact surface (54) to said first region (40) of said structural element (7) during an impact at a first predetermined speed, in particular a low-speed impact.

3. The component (9) according to claim 2, **characterized in that** said first predetermined force threshold is less than a third force threshold corresponding to the forces that would be transmitted by said first contact surface (54) to said first region (40) of said structural element (7) during an impact at a second predetermined speed, in particular a high-speed impact.

4. The component (9) according to any one of claims 1 to 3, **characterized in that** said stop element (52) is fastened to said longitudinal wall of said extension (50) by frangible fastening means (78).

5. The component (9) according to claim 4, **characterized in that** said frangible fastening means (78) are configured to break when said first part of the forces becomes equal to said first predetermined force threshold.

6. The component (9) according to any one of claims 1 to 3, **characterized in that** it includes a bending initiation zone (80), said component (9) being configured to bend at said bending initiation zone (80) when said first part of the forces becomes equal to said first predetermined force threshold, such that said first part of the forces transmitted by said first contact surface (54) of said stop element (52) to said first region (40) of said structural element (7) remains below said first predetermined force threshold.

7. The component (9) according to any one of claims 1 to 6, **characterized in that** said rear end (50b) comprises at least one second contact surface (72) intended to face at least one second region (44) of said structural element (7) when said component (9) is connected to said structural element (7), said component (9) being configured such that when said extension (50) is subject to an impact creating forces in said longitudinal direction from said front end (50a) toward said rear end (50b), said second contact surface (72) comes into contact with said second region (44) of said structural element (7) and transmits a second part of the forces created by said impact to said second region (44) of said structural element (7).

8. The component (9) according to claim 7, **characterized in that** the first (54) and second (72) contact surfaces extend in a first and second plane, respectively, said first and second planes being separate.

9. The component (9) according to claim 8, **characterized in that** said rear end (50b) comprises the one second contact surface (72) and a third contact surface (74), said third contact surface (74) extending in a third plane separate from the first and second planes, said extension (50) being configured such that when said extension (50) is subject to an impact creating forces in said longitudinal direction from said front end (50a) toward said rear end (50b), said second contact surface (72) comes into contact with said second region (44) of said structural element (7) and transmits a second part of the forces created by said impact to said second region (44) of said structural element (7), and said third contact surface (74) comes into contact with a third region (48) of said structural element (7) and transmits a third part of the forces created by said impact to said third region (48) of said structural element (7).

10. The component (9) according to any one of claims 7 to 9, **characterized in that** said extension (50) comprises an elongate part (64) extending in said longitudinal direction and an intermediate part (66) secured to one end (50b) of said elongate part (64), said intermediate part (66) comprising said second contact surface (72).

11. The component (9) according to claims 9 and 10, **characterized in that** said intermediate part (66) further comprises said third contact surface (74).

12. A front low area section of a motor vehicle, comprising a component (9) according to any one of claims 1 to 11 and a structural element (7) of the cradle type comprising a first region (40), said component (9) being connected to said structural element (7), said stop element (52) facing a first region (40) of said structural element (7), said stop element (52) being configured such that when said extension (50) is subject to an impact creating forces in said longitudinal direction from said front end (50a) toward said rear end (50b), said first contact surface (54) of said stop element (52) comes into contact with said first region (40) of said structural element (7) and transmits a first part of the forces created by said impact to said first region (40) of said structural element (7).

13. The front low area section according to claim 12, **characterized in that** said rear end (50b) comprises at least one second contact surface (72) facing at least one second region (44) of said structural element (7), said component (9) being configured such that when said extension (50) is subject to an impact creating forces in said longitudinal direction from said front end (50a) toward said rear end (50b), said second contact surface (72) comes into contact with said second region (44) of said structural element (7) and transmits a second part of the forces created by said impact to said second region (44) of said structural element (7).

14. The front low area section according to claim 13, **characterized in that** a first distance (d1) between said first contact surface (54) and said first region (40) is substantially equal to a second distance (d2) between said second contact surface (72) and said second region (44), the difference between said first distance (d1) and said second distance (d2) being, in absolute value, less than or equal to 1.0 mm.

15. The front low area section according to any one of claims 13 or 14, **characterized in that**:
- the first (54) and second (72) contact surfaces extend in a first and second plane, respectively, said first and second planes being separate,
- said rear end (50b) comprises the one second contact surface (72) and a third contact surface (74), said third contact surface (74) extending in a third plane separate from the first and second planes, said extension (50) being configured such that when said extension (50) is subject to an impact creating forces in said longitudinal direction from said front end (50a) toward said rear end (50b), said second contact surface (72) comes into contact with said second region (44) of said structural element (7) and transmits a second part of the forces created by said impact to said second region (44) of said structural element (7), and said third contact surface (74) comes into contact with a third region (48) of said structural element (7) and transmits a third part of the forces created by said impact to said third region (48) of said structural element (7).

16. The front low area section according to claims 14 and 15, **characterized in that** the second distance (d2) between said second contact surface (72) and said second region (44) is substantially equal to a third distance (d3) between said third contact surface (74) and said third region (48), the difference between said second distance (d2) and said third distance (d3) being, in absolute value, less than or equal to 1.0 mm.

17. A motor vehicle structure, comprising a front low area section according to any one of claims 12 to 16.
